# EUROPEAN PATENT APPLICATION

(11) **EP 4 593 277 A1**
(43) Date of publication of application: **30.07.2025**
(21) Application number: 23878712.1
(22) Date of filing: 30.06.2023
(51) Int. Cl.: H02M 7/42, H02M 3/00, H02J 3/01, H02J 3/38

(54) **POWER CONVERSION SYSTEM AND RIPPLE CURRENT SUPPRESSION METHOD THEREFOR**

(30) Priority: 18.10.2022 CN 202211273333
(71) Applicant: Huawei Digital Power Technologies Co., Ltd., Shenzhen, Guangdong 518043 (CN)
(72) Inventor: CHEN, Dong, Shenzhen, Guangdong 518043 (CN); LU, Fenglong, Shenzhen, Guangdong 518043 (CN); TANG, Yunyu, Shenzhen, Guangdong 518043 (CN); SHI, Lei, Shenzhen, Guangdong 518043 (CN); XIN, Kai, Shenzhen, Guangdong 518043 (CN)
(74) Representative: Pfenning, Meinig & Partner mbB
(86) International application number: PCT/CN2023/105306
(87) International publication number: WO 2024/082715

(57) **Abstract**

This application provides a power conversion system and a ripple current suppression method thereof. The power conversion system includes a controller, M direct current conversion units, a bus capacitor, and an inverter unit. An input end of each of the M direct current conversion units is connected to one direct current power supply. Output ends of the M direct current conversion units are connected in parallel and then connected to an input end of the inverter unit. The bus capacitor is connected in parallel to the input end of the inverter unit. An output end of the inverter unit is configured to connect to a power grid or a load. The controller is configured to control N direct current conversion units in the M direct current conversion units to adjust output currents/input currents when an amplitude of a ripple current of the bus capacitor is greater than a first threshold, to decrease the amplitude of the ripple current of the bus capacitor. M is greater than or equal to 2, and N is a positive integer less than M. **In** this application, when an output power of the power conversion system is not significantly decreased, suppression effect on the ripple current of the bus capacitor can be improved, and long-term reliability of the power conversion system can be improved.

## Description

This application claims priority to Chinese Patent Application No. 202211273333.2, filed with the China National Intellectual Property Administration on October 18, 2022, and entitled "POWER CONVERSION SYSTEM AND RIPPLE CURRENT SUPPRESSION METHOD THEREOF", which is incorporated herein by reference in its entirety.

### TECHNICAL FIELD

This application relates to the field of power electronics technologies, and in particular, to a power conversion system and a ripple current suppression method thereof.

### BACKGROUND

A new energy power generation system usually includes a plurality of direct current conversion circuits, a bus capacitor, and an inverter circuit. The direct current conversion circuit may convert electrical energy provided by a power supply unit such as a solar power generation unit, a wind power generation unit, or an energy storage battery into a direct current, and the direct current is transmitted to the inverter circuit through a direct current bus. The inverter circuit converts the direct current into an alternating current and outputs the alternating current to a public power grid. The bus capacitor is connected in parallel to the direct current bus, and is configured to maintain a voltage of the direct current bus. In the new energy power generation system, the bus capacitor may absorb high-frequency ripples caused by operations of high-frequency switches of the direct current conversion circuit and the inverter circuit, and absorb utility frequency ripples mapped from the public power grid to the direct current bus.

In research and practice processes, the inventor of this application finds that, in the conventional technology, when a system power (for example, an input power or an output power) of the new energy power generation system is increased, a ripple current of the bus capacitor on the direct current bus in the new energy power generation system is increased accordingly, and a loss of the bus capacitor is also increased. This shortens a service life of the bus capacitor, and reduces long-term reliability of the new energy power generation system accordingly.

### SUMMARY

This application provides a power conversion system and a ripple current suppression method thereof, to improve suppression effect on a ripple current of a bus capacitor, reduce a loss of the bus capacitor, and improve long-term reliability of the power conversion system when an output power of the power conversion system is not significantly decreased.

According to a first aspect, this application provides a power conversion system. The power conversion system includes a controller, M direct current conversion units, a bus capacitor, and an inverter unit. An input end of each of the M direct current conversion units is connected to one direct current power supply. Output ends of the M direct current conversion units are connected in parallel and then connected to an input end of the inverter unit. The bus capacitor is connected in parallel to the input end of the inverter unit. An output end of the inverter unit is configured to connect to a power grid or a load. The controller is configured to: control N direct current conversion units in the M direct current conversion units to adjust output currents/input currents when an amplitude of a ripple current of the bus capacitor is greater than a first threshold, to decrease the amplitude of the ripple current of the bus capacitor. M is an integer greater than or equal to 2, and N is an integer less than M and greater than or equal to 1. A ripple means an alternating current component superimposed on a direct current steady component in a direct current voltage or a current. In this application, the amplitude of the ripple current of the bus capacitor may indicate a peak value or a valid value of the ripple current. In this application, when the amplitude of the ripple current of the bus capacitor is relatively large (that is, greater than the first threshold), the controller in the power conversion system controls one or some direct current conversion units to adjust an output current/an input current, and controls other direct current conversion units to still maintain normal power output. In this way, when an output power of the power conversion system is not significantly decreased, the amplitude of the ripple current of the bus capacitor is decreased, a loss of the bus capacitor is reduced, and a service life of the bus capacitor is prolonged, thereby improving long-term reliability of the power conversion system.

In a feasible implementation, the controller is configured to: determine that the amplitude of the ripple current of the bus capacitor is greater than the first threshold when an output current of the inverter unit or a sum of input currents of the M direct current conversion units is greater than a second threshold. Herein, the second threshold may include a first output current threshold and a first input current threshold, and the first output current threshold and the first input current threshold may be respectively used for comparison with the output current of the inverter unit and the sum of the input currents of the M direct current conversion units. The first output current threshold and the first input current threshold may have different values or a same value. That an output current of the inverter unit is greater than a second threshold may be understood as follows: All three phases of currents in the output current of the inverter unit are greater than the second threshold, or a sum of three phases of currents in the output current of the inverter unit is greater than the second threshold. This is specifically determined according to an actual application scenario. Herein, the output current of the inverter unit or the sum of the input currents of the M direct current conversion units reflects the amplitude of the ripple current of the bus capacitor, and a current value may be obtained by using an existing current sampling apparatus. This helps reduce circuit costs and reduce system complexity.

In a feasible implementation, the controller is configured to: control the N direct current conversion units in the M direct current conversion units to adjust the output currents/the input currents, and output currents in a direction opposite to a direction of the ripple current of the bus capacitor when the amplitude of the ripple current of the bus capacitor is greater than the first threshold, to decrease the amplitude of the ripple current of the bus capacitor through current superposition and cancellation effect. It may be understood that, when the controller controls the direct current conversion unit to adjust the output current or the input current, the direct current conversion unit outputs a current that can meet a requirement (that is, a current direction is opposite to the direction of the ripple current of the bus capacitor). In this way, after the output currents of the N direct current conversion units are superimposed on the ripple current of the bus capacitor, a part that is of the ripple current of the bus capacitor and that is in an opposite direction of and in a same amplitude as the output current is canceled, so that the amplitude of the ripple current of the bus capacitor is decreased, and the ripple current of the bus capacitor is suppressed.

In a feasible implementation, the controller is configured to: generate an output current control signal, and control, based on the output current control signal, the N direct current conversion units to work, to adjust the output currents of the N direct current conversion units. Alternatively, the controller is configured to: generate an input current control signal, and control, based on the input current control signal, the N direct current conversion units to work, to adjust the input currents of the N direct current conversion units. The input current and the output current of the direct current conversion unit satisfy a preset proportion relationship, and the preset proportion relationship may be determined according to a load requirement or a circuit element requirement in an actual application scenario. In this application, when the amplitude of the ripple current of the bus capacitor is greater than the first threshold, the controller generates the output current control signal to control the N direct current conversion units to work to adjust the output currents thereof, so that a ripple of the output current of the direct current conversion unit can be adjusted. In this way, the amplitude of the ripple current flowing through the bus capacitor may be decreased accordingly, thereby reducing a loss of the bus capacitor and improving long-term reliability of the power conversion system. Alternatively, the controller may generate the input current control signal to control the N direct current conversion units to work to adjust the input currents thereof. In other words, the input current of the direct current conversion unit is controlled, so that the output current of the direct current conversion unit may be indirectly controlled. In this way, the ripple current of the bus capacitor is suppressed, a service life of the bus capacitor is prolonged, and long-term reliability of the power conversion system is ensured.

In a feasible implementation, the controller is configured to: obtain a first output current reference based on a capacitor current of the bus capacitor, and generate the output current control signal based on the first output current reference and sampled output current values of the N direct current conversion units. The first output current reference may be a current signal in a direction opposite to the direction of the ripple current of the bus capacitor. Alternatively, the controller is configured to: obtain a first input current reference based on a capacitor current of the bus capacitor, and generate the input current control signal based on the first input current reference and sampled input current values of the N direct current conversion units. The first input current reference is also a current signal in a direction opposite to the direction of the ripple current of the bus capacitor. In this application, the capacitor current of the bus capacitor is obtained through sampling, so that a value of the ripple current included in the capacitor current of the bus capacitor can be accurately obtained, and the first output current reference is generated based on the capacitor current of the bus capacitor. Correspondingly, the output current control signal generated based on the first output current reference can effectively decrease the amplitude of the ripple current of the bus capacitor, and ensure good ripple current suppression effect. After the first input current reference and the input current control signal are generated based on the capacitor current of the bus capacitor, ripples in the output current of the direct current conversion unit may be indirectly adjusted based on the input current control signal, and the amplitude of the ripple current of the bus capacitor may also be effectively decreased.

In a feasible implementation, the controller is configured to:
obtain an envelope of the capacitor current based on the capacitor current, and obtain the first output current reference or the first input current reference based on the envelope of the capacitor current; or
obtain a low-frequency component of the capacitor current based on the capacitor current, and obtain the first output current reference or the first input current reference based on the low-frequency component of the capacitor current.

The low-frequency component is a relative concept, and may include a part that has a relatively low frequency and occupies a relatively large percentage in an alternating current component of the capacitor current. This may be specifically determined according to an actual application scenario. In this application, because the low-frequency component or the envelope of the current of the bus capacitor can accurately reflect a current ripple of the bus capacitor, and the first input current reference/the first output current reference may be obtained in the foregoing manners to control the output current of the direct current conversion unit. This can effectively suppress the current ripple of the bus capacitor, help reduce a loss of the bus capacitor, and improve long-term reliability of the power conversion system.

In a feasible implementation, the controller is configured to: obtain a second output current reference based on the output current of the inverter unit, and generate the output current control signal based on the second output current reference and sampled output current values of the N direct current conversion units. Alternatively, the controller is configured to: obtain a second input current reference based on the output current of the inverter unit, and generate the input current control signal based on the second input current reference and sampled input current values of the N direct current conversion units. In this application, a sum of three phases of currents in the output current of the inverter unit may reflect the current ripple of the bus capacitor, and the controller obtains the second output current reference based on the sum of the three phases of the currents, and generates the output current control signal based on the second output current reference to control the direct current conversion unit to adjust the output current. An extra module for sampling a capacitor current of the bus capacitor may not be added, and an existing module for sampling an output current of the power conversion system may still be used to suppress the current ripple of the bus capacitor. This reduces circuit costs, and reduces circuit complexity. In addition, the second input current reference is obtained based on the sum of the three phases of the currents, and the input current control signal is generated based on the second input current reference to control the direct current conversion unit to adjust the input current, so that the direct current conversion unit can be indirectly controlled to adjust the output current. In this way, a module for sampling a capacitor current of the bus capacitor may not be added, and an existing module for sampling an input current of the power conversion system may still be used to suppress the current ripple of the bus capacitor. This helps reduce circuit costs, and reduce circuit complexity.

In a feasible implementation, the controller is configured to:
obtain an envelope of the sum of the three phases of the currents in the output current of the inverter unit based on the output current of the inverter unit, and obtain the second output current reference or the second input current reference based on the envelope of the sum of the three phases of the currents; or
obtain a low-frequency component of the sum of the three phases of the currents in the output current of the inverter unit based on the output current of the inverter unit, and obtain the second output current reference or the second input current reference based on the low-frequency component of the sum of the three phases of the currents.

In this application, the low-frequency component/the envelope of the sum of the three phases of the currents in the output current of the inverter unit can accurately reflect the current ripple of the bus capacitor, and the second output current reference/the second input current reference may be obtained in these manners to control the output current of the direct current conversion unit. This can effectively suppress the current ripple of the bus capacitor, help reduce a loss of the bus capacitor, improve long-term reliability of the power conversion system, and does not increase extra circuit costs. Therefore, applicability is high.

In a feasible implementation, the controller is configured to: control K direct current conversion units in the M direct current conversion units to adjust output currents/input currents when the amplitude of the ripple current of the bus capacitor is greater than a third threshold, to decrease the amplitude of the ripple current of the bus capacitor. The third threshold is greater than or equal to the first threshold, and K is an integer less than M.

In a feasible implementation, the controller is further configured to: control T other direct current conversion units in the M direct current conversion units except the K direct current conversion units to adjust output currents/input currents when the K direct current conversion units are controlled to adjust the output currents/the input currents to decrease the amplitude of the ripple current of the bus capacitor, and the amplitude of the ripple current of the bus capacitor is greater than a fourth threshold, to decrease the amplitude of the ripple current of the bus capacitor. The fourth threshold is greater than or equal to the third threshold. In this application, the amplitude of the ripple current of the bus capacitor may be decreased, and the N direct current conversion units may be sequentially controlled to adjust the output currents/the input currents, to gradually influence an input current of a direct current bus in the power conversion system, thereby suppressing the ripple current of the bus capacitor. In addition, a plurality of direct current conversion units are controlled to gradually switch to a ripple current suppression mode, so that when the ripple current of the bus capacitor is suppressed, as many direct current conversion units as possible can be controlled to still work in a normal mode, to increase an overall power of the power conversion system.

In a feasible implementation, the controller is further configured to:
control, based on a reference control signal, the T other direct current conversion units to work when the T other direct current conversion units are controlled to adjust the output currents/the input currents to decrease the amplitude of the ripple current of the bus capacitor, and the amplitude of the ripple current of the bus capacitor is less than the third threshold, to adjust the input currents/input voltages of the T other direct current conversion units. The reference control signal is obtained based on a preset current reference or a preset voltage reference. The reference control signal may be a control signal obtained when the controller controls the direct current conversion unit to work normally to output a power. In this application, the controller may: correspondingly control a working status of the direct current conversion unit based on a real-time change of the amplitude of the ripple current of the bus capacitor; and when the amplitude of the ripple current of the bus capacitor is relatively small, control, in a timely manner, the direct current conversion unit that previously works in the ripple current suppression mode to switch back to a normal mode, to ensure an overall output power of the power conversion system.

In a feasible implementation, the controller is further configured to:
control, based on the reference control signal, one or more of the K direct current conversion units to work when the K direct current conversion units are controlled to adjust the output currents/the input currents to suppress the ripple current of the bus capacitor, and the amplitude of the ripple current of the bus capacitor is less than the third threshold, to adjust input currents/ input voltages of the one or more direct current conversion units. In this application, when the amplitude of the ripple current of the bus capacitor is relatively small, the controller sequentially controls some direct current conversion units working in the ripple current suppression mode to switch back to the normal mode, to increase the output power of the power conversion system while suppressing the ripple current of the bus capacitor. In this way, a service life of the bus capacitor can be prolonged, and the output power of the power conversion system can also be ensured, thereby achieving a balance between working efficiency and long-term reliability of the power conversion system.

According to a second aspect, this application provides a ripple current suppression method of a power conversion system. The method is applied to a controller in the power conversion system. The power conversion system further includes M direct current conversion units, a bus capacitor, and an inverter unit. An input end of each of the M direct current conversion units is connected to one direct current power supply. Output ends of the M direct current conversion units are connected in parallel and then connected to an input end of the inverter unit. The bus capacitor is connected in parallel to the input end of the inverter unit. An output end of the inverter unit is configured to connect to a power grid or a load. The method includes:
controlling N direct current conversion units in the M direct current conversion units to adjust output currents/input currents when an amplitude of a ripple current of the bus capacitor is greater than a first threshold, to decrease the amplitude of the ripple current of the bus capacitor, where M is an integer greater than or equal to 2, and N is an integer less than M and greater than or equal to 1.

In a feasible implementation, the method further includes:
determining that the amplitude of the ripple current of the bus capacitor is greater than the first threshold when an output current of the inverter unit or a sum of input currents of the M direct current conversion units is greater than a second threshold.

In a feasible implementation, the controlling N direct current conversion units in the M direct current conversion units to adjust output currents/input currents when an amplitude of a ripple current of the bus capacitor is greater than a first threshold, to decrease the amplitude of the ripple current of the bus capacitor includes:

controlling the N direct current conversion units in the M direct current conversion units to adjust the output currents/the input currents, and outputting currents in a direction opposite to a direction of the ripple current of the bus capacitor when the amplitude of the ripple current of the bus capacitor is greater than the first threshold, to decrease the amplitude of the ripple current of the bus capacitor through current superposition and cancellation effect.

In a feasible implementation, the controlling N direct current conversion units in the M direct current conversion units to adjust output currents includes:
generating an output current control signal, and controlling, based on the output current control signal, the N direct current conversion units to work, to adjust the output currents of the N direct current conversion units; or
the controlling N direct current conversion units in the M direct current conversion units to adjust input currents includes:
   generating an input current control signal, and controlling, based on the input current control signal, the N direct current conversion units to work, to adjust the input currents of the N direct current conversion units.

In a feasible implementation, the generating an output current control signal includes:
obtaining a first output current reference based on a capacitor current of the bus capacitor, and generating the output current control signal based on the first output current reference and sampled output current values of the N direct current conversion units; or
the generating an input current control signal includes:
   obtaining a first input current reference based on a capacitor current of the bus capacitor, and generating the input current control signal based on the first input current reference and sampled input current values of the N direct current conversion units.

In a feasible implementation, the obtaining a first output current reference based on a capacitor current of the bus capacitor includes:
obtaining an envelope of the capacitor current based on the capacitor current, and obtaining the first output current reference based on the envelope of the capacitor current; or
obtaining a low-frequency component of the capacitor current based on the capacitor current, and obtaining the first output current reference based on the low-frequency component of the capacitor current.

In a feasible implementation, the generating an output current control signal includes:
obtaining a second output current reference based on the output current of the inverter unit, and generating the output current control signal based on the second output current reference and sampled output current values of the N direct current conversion units; or
the generating an input current control signal includes:
   obtaining a second input current reference based on the output current of the inverter unit, and generating the input current control signal based on the second input current reference and sampled input current values of the N direct current conversion units.

In a feasible implementation, the obtaining a second output current reference based on the output current of the inverter unit includes:
obtaining an envelope of a sum of three phases of currents in the output current of the inverter unit based on the output current of the inverter unit, and obtaining the second output current reference based on the envelope of the sum of the three phases of the currents; or
obtaining a low-frequency component of a sum of three phases of currents in the output current of the inverter unit based on the output current of the inverter unit, and obtaining the second output current reference based on the low-frequency component of the sum of the three phases of the currents.

In a feasible implementation, the controlling N direct current conversion units in the M direct current conversion units to adjust output currents/input currents when an amplitude of a ripple current of the bus capacitor is greater than a first threshold, to decrease the amplitude of the ripple current of the bus capacitor includes:
controlling K direct current conversion units in the M direct current conversion units to adjust output currents/input currents when the amplitude of the ripple current of the bus capacitor is greater than a third threshold, to decrease the amplitude of the ripple current of the bus capacitor, where the third threshold is greater than or equal to the first threshold, and K is an integer less than M.

In a feasible implementation, the method further includes:
controlling T other direct current conversion units in the M direct current conversion units except the K direct current conversion units to adjust output currents/input currents when the K direct current conversion units are controlled to adjust the output currents/the input currents to decrease the amplitude of the ripple current of the bus capacitor, and the amplitude of the ripple current of the bus capacitor is greater than a fourth threshold, to decrease the amplitude of the ripple current of the bus capacitor, where the fourth threshold is greater than or equal to the third threshold.

In a feasible implementation, the method further includes:
controlling, based on a reference control signal, the T other direct current conversion units to work when the T other direct current conversion units are controlled to adjust the output currents/the input currents to decrease the amplitude of the ripple current of the bus capacitor, and the amplitude of the ripple current of the bus capacitor is less than the fourth threshold, to adjust the input currents/input voltages of the T other direct current conversion units, where the reference control signal is obtained based on a preset current reference or a preset voltage reference.

In a feasible implementation, the method further includes:
controlling, based on the reference control signal, one or more of the K direct current conversion units to work when the K direct current conversion units are controlled to adjust the output currents/the input currents to decrease the amplitude of the ripple current of the bus capacitor, and the amplitude of the ripple current of the bus capacitor is less than the third threshold, to adjust input currents/ input voltages of the one or more direct current conversion units.

In this application, when the output power or an input power of the power conversion system is increased, and the amplitude of the ripple current of the bus capacitor is greater than the first threshold, the controller controls, based on the output current control signal/the input current control signal, one or some direct current conversion units included in the power conversion system to adjust an output current/an input current thereof, to decrease the amplitude of the ripple current of the bus capacitor, and controls other direct current conversion units to maintain original power output. In this way, when the output power of the power conversion system is not significantly decreased, the ripple current of the bus capacitor is suppressed, a service life of the capacitor is prolonged, and long-term reliability of the system is improved. The output current control signal/the input current control signal may be obtained based on the capacitor current of the bus capacitor, or may be obtained based on the sum of the three phases of the currents in the output current of the power conversion system. Both the capacitor current and the sum of the three phases of the currents can accurately reflect the current ripple of the bus capacitor. Therefore, according to this application, suppression effect on the ripple current of the bus capacitor can be improved, a loss of the bus capacitor can be reduced, and long-term reliability of the power conversion system can be improved. In addition, in this application, the controller may: further sequentially control the plurality of direct current conversion units to adjust output currents/input currents to suppress the ripple current of the bus capacitor when the amplitude of the ripple current of the bus capacitor is continuously greater than the first threshold; or reversely and sequentially control, based on the reference control signal, the plurality of direct current conversion units to work in the normal mode when the amplitude of the ripple current of the bus capacitor becomes smaller, so that these direct current conversion units restore normal power output. In this way, when the ripple current of the bus capacitor is suppressed, as many direct current conversion units as possible may be controlled to still work normally, to improve an overall power of the power conversion system.

### BRIEF DESCRIPTION OF DRAWINGS

FIG. 1 is a diagram of an application scenario of a power conversion system according to this application;
FIG. 2 is a diagram of another application scenario of a power conversion system according to this application;
FIG. 3 is a waveform diagram of a ripple current;
FIG. 4 is a control block diagram in which a controller in a power conversion system controls a direct current conversion unit to work;
FIG. 5 is another control block diagram in which a controller in a power conversion system controls a direct current conversion unit to work;
FIG. 6 is a diagram of a structure of a power conversion system according to this application;
FIG. 7a is a control block diagram in which a controller in a power conversion system controls a direct current conversion unit to work according to this application;
FIG. 7b is another control block diagram in which a controller in a power conversion system controls a direct current conversion unit to work according to this application;
FIG. 7c is another control block diagram in which a controller in a power conversion system controls a direct current conversion unit to work according to this application;
FIG. 7d is another control block diagram in which a controller in a power conversion system controls a direct current conversion unit to work according to this application;
FIG. 8a is another control block diagram in which a controller in a power conversion system controls a direct current conversion unit to work according to this application;
FIG. 8b is another control block diagram in which a controller in a power conversion system controls a direct current conversion unit to work according to this application;
FIG. 8c is another control block diagram in which a controller in a power conversion system controls a direct current conversion unit to work according to this application;
FIG. 8d is another control block diagram in which a controller in a power conversion system controls a direct current conversion unit to work according to this application; and
FIG. 9 is a schematic flowchart of a ripple current suppression method of a power conversion system according to this application.

### DESCRIPTION OF EMBODIMENTS

Importance of new energy in an entire energy supply system is increasing due to an increasing demand for energy and a limited nature of conventional energy. New energy power generation is of great significance in an electric power industry. Small grids formed through new energy power generation are connected to a public power grid, which may improve reliability and safety of the public power grid, help expand a coverage area of the public power grid, reduce costs, and the like. A new energy power generation system may obtain a direct current by using solar energy, wind energy, a matching energy storage system, and the like, convert the direct current into an alternating current of a mains frequency, and output the alternating current to the public power grid. Specifically, in the new energy power generation system, a module for converting a direct current input by a power supply (such as a photovoltaic array, a wind turbine, or an energy storage battery) into an alternating current may be referred to as a power conversion system. A power conversion system according to this application may be applicable to power supply to a plurality of types of power generation devices such as a base station device or a household device (such as a refrigerator or an air conditioner). This may be specifically determined according to an actual application scenario, and is not limited herein. The power conversion system according to this application may be adaptable to different application scenarios, for example, a solar energy-based power supply scenario, and a hybrid power supply scenario with solar energy and an energy storage battery. This may be specifically determined according to an actual application scenario, and is not limited herein.

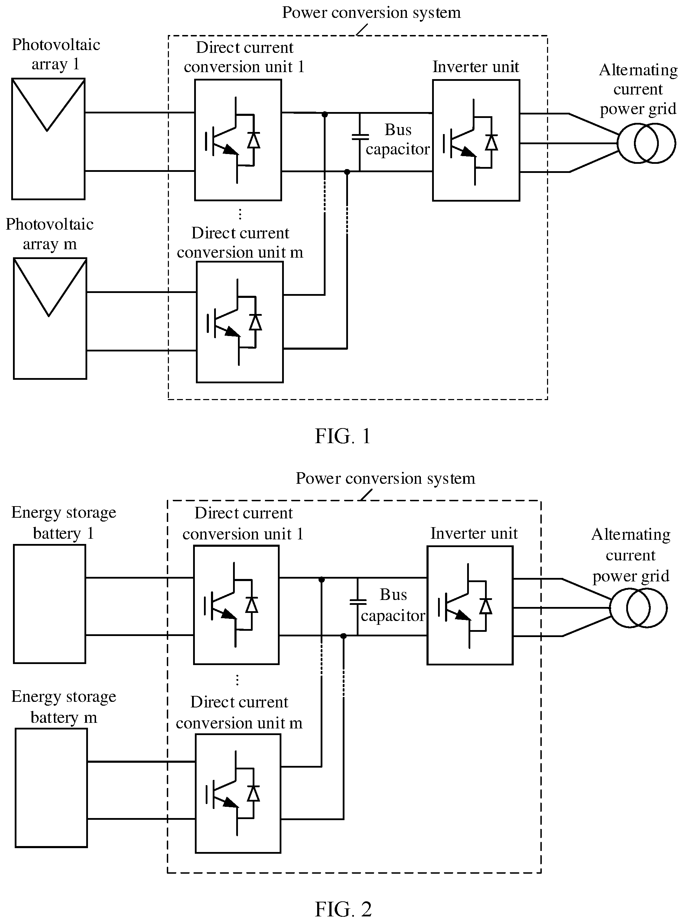

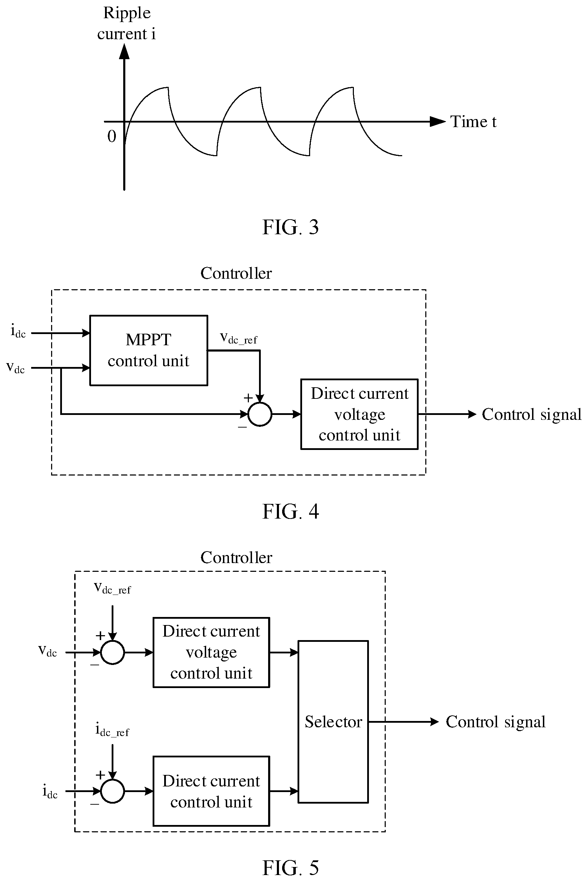

FIG. 1 is a diagram of an application scenario of a power conversion system according to this application. The power conversion system according to this application may include a controller (not shown in FIG. 1), M (where M is greater than or equal to 2) direct current conversion units, a bus capacitor, and an inverter unit. An input end of the direct current conversion unit may serve as an input end of the power conversion system. An input end of each of the M direct current conversion units is connected to an output end of a direct current power supply. In other words, each direct current conversion unit is independently connected to one direct current power supply. The direct current power supply may be a photovoltaic array (as shown in FIG. 1), an energy storage battery (as shown in FIG. 2, where FIG. 2 is a diagram of another application scenario of a power conversion system according to this application, and m in FIG. 2 is equal to a value of M), or the like. Output ends of the M direct current conversion units are connected in parallel to a direct current bus, and an input end of the inverter unit is connected to the direct current bus. In other words, output ends of a plurality of direct current conversion units are connected in parallel to the input end of the inverter unit. The bus capacitor is connected in parallel to the input end of the inverter unit. In other words, the bus capacitor is connected to the direct current bus. An output end of the inverter unit serves as an output end of the power conversion system, and may be connected to a power grid (also referred to as an alternating current power grid or a public power grid), a load, or the like. It may be understood that the plurality of direct current conversion units included in the power conversion system are configured to convert variable direct currents input by a plurality of direct current power supplies into direct currents whose voltages or currents are controllable; the inverter unit is configured to convert the direct current output by the direct current conversion unit into an alternating current; the controller is configured to control the direct current conversion unit and the inverter unit to work; and the bus capacitor is configured to maintain a voltage of the direct current bus, absorb high-frequency ripples caused by working of high-frequency switches of the direct current conversion unit and the inverter unit, and absorb utility frequency ripples mapped from the public power grid to the direct current bus. Both the high-frequency ripple and the utility frequency ripple are ripples. The ripple means an alternating current component superimposed on a direct current steady component in a direct current voltage or a current. In other words, the ripple is an alternating current component other than a direct current steady component. FIG. 3 is a waveform diagram of a ripple current. The ripple current is a signal that is approximately a sine wave. A magnitude of the ripple may be represented by a valid value or a peak value. In the application scenario shown in FIG. 1 or FIG. 2, a current flowing through the bus capacitor includes a ripple current. In this application, an amplitude of a ripple current of the bus capacitor may indicate a peak value or a valid value of the ripple current.

As shown in FIG. 1 and FIG. 2, when application scenarios of the power conversion system are different, direct current power supplies that provide direct current input currents/direct current input voltages for the direct current conversion unit in the power conversion system may be different. For example, in the scenario shown in FIG. 1, the direct current power supply may be a photovoltaic array, a solar panel, or the like, and the scenario shown in FIG. 1 may be a solar energy-based power supply scenario, or the like. In the scenario shown in FIG. 2, the direct current power supply may be an energy storage battery, or the like, and the scenario shown in FIG. 2 may be a hybrid power supply scenario with solar energy and an energy storage battery, or the like. This is not limited in this application. Correspondingly, in different application scenarios, control logic used by the controller in the power conversion system to control the direct current conversion unit to work may be different. FIG. 4 is a control block diagram in which a controller in a power conversion system controls a direct current conversion unit to work. A working scenario of the direct current conversion unit is shown in FIG. 1. That is, an input end of the direct current conversion unit is connected to an output end of a photovoltaic array. In this scenario, an input signal received by the controller includes an input current i_{dc} of the direct current conversion unit and an input voltage v_{dc} of the direct current conversion unit, where i_{dc} and v_{dc} respectively indicate an output current and an output voltage of the photovoltaic array. The controller generates a control signal based on the input signal, and controls, based on the control signal, the direct current conversion unit to work. Specifically, the controller may include a maximum power point tracking (Maximum Power Point Tracking, MPPT) control module and a direct current voltage control module. The MPPT control module generates, based on i_{dc} and v_{dc}, an input voltage reference v_{dc_ref} for implementing maximum power point tracking of the photovoltaic array, and the direct current voltage control module generates, based on the input voltage reference v_{dc_ref} and the input voltage v_{dc} of the direct current conversion unit, the control signal for controlling the direct current conversion unit. In this scenario, the controller in the power conversion system may control the input voltage of the direct current conversion unit, so that the direct current conversion unit transmits a maximum power of the photovoltaic array. FIG. 5 is another control block diagram in which a controller in a power conversion system controls a direct current conversion unit to work. A working scenario of the direct current conversion unit is shown in FIG. 2. That is, an input end of the direct current conversion unit is connected to an output end of an energy storage battery. In this scenario, an input signal received by the controller includes an input current i_{dc} and an input voltage v_{dc} of the direct current conversion unit, where i_{dc} and v_{dc} respectively indicate an output current and an output voltage of the energy storage battery. The controller generates a control signal based on the input signal, and controls, based on the control signal, the direct current conversion unit to work. Specifically, the controller may include a direct current voltage control module, a direct current control module, and a selector. The direct current voltage control module generates a first signal based on an input voltage reference v_{dc_ref} and the input voltage v_{dc}; the direct current control module generates a second signal based on an input current reference i_{dc_ref} and the input current i_{dc}; and the selector selects one of the first signal and the second signal as the control signal for controlling the direct current conversion unit. In this scenario, the controller in the power conversion system may control the input current or the input voltage of the direct current conversion unit, so that the direct current conversion unit performs controllable discharging or charging on the energy storage battery. However, in the application scenario shown in FIG. 1 or FIG. 2, if an input power or an output power of the power conversion system is increased, working logic of the direct current conversion unit in the power conversion system remains original control logic (as shown in FIG. 4 or FIG. 5). In this case, the ripple current of the bus capacitor is increased accordingly, and a loss of the bus capacitor is also increased, which shortens a service life of the bus capacitor (when the bus capacitor is an electrolytic capacitor, the service life of the bus capacitor is greatly shortened). Consequently, long-term reliability of the power generation system is also reduced. That is, long-term reliability of a new energy generation system is relatively low.

When the amplitude of the ripple current of the bus capacitor is greater than a first threshold, the controller in the power conversion system provided in this application controls N (where N is less than M and greater than or equal to 1) direct current conversion units in M (where M is greater than or equal to 2) direct current conversion units included in the power conversion system to adjust output currents/input currents, to decrease the amplitude of the ripple current of the bus capacitor, thereby suppressing the ripple current of the bus capacitor. In other words, one or some direct current conversion units are controlled to work in a ripple current suppression mode, to decrease the amplitude of the ripple current of the bus capacitor, and other direct current conversion units are controlled to still maintain normal power output. In this way, when the output power of the power conversion system is not significantly decreased, the ripple current of the bus capacitor is suppressed, a loss of the bus capacitor is reduced, a service life of the bus capacitor is prolonged, and long-term reliability of the power conversion system is improved.

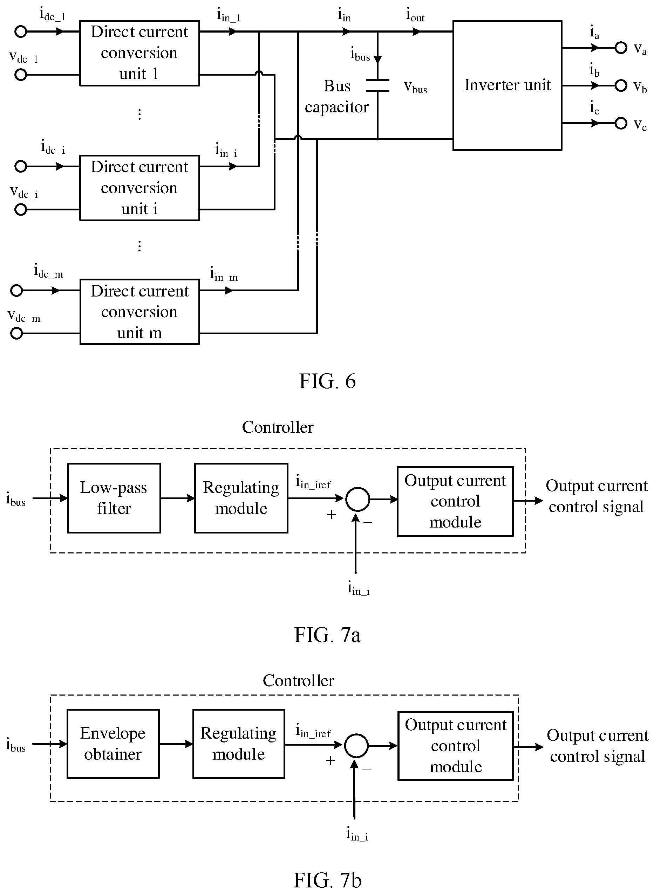

FIG. 6 is a diagram of a structure of a power conversion system according to this application. As shown in FIG. 6, the power conversion system includes a controller, M (which is m shown in FIG. 6, where m≥2, and m is equal to M) direct current conversion units, a bus capacitor, and an inverter unit. An input end of each of the M direct current conversion units is connected to one direct current power supply, output ends of the M direct current conversion units are connected in parallel to a direct current bus, and an input end of the inverter unit is connected to the direct current bus. In other words, the output ends of the M direct current conversion units are connected in parallel and then connected to the input end of the inverter unit. The bus capacitor is connected in parallel to the input end of the inverter unit, and the bus capacitor is connected to the direct current bus. An output end of the inverter unit serves as an output end of the power conversion system and may be connected to a power grid or a load, and the output end of the inverter unit includes three phases of output ends. As shown in FIG. 6, the at least two direct current conversion units may include a direct current conversion unit 1, ..., a direct current conversion unit i, ..., and a direct current conversion unit m. An input current/an input voltage of each direct current conversion unit is equal to an output current/an output voltage of the direct current power supply connected to the direct current conversion unit. A sum of output currents of the M direct current conversion units is equal to an input current of the direct current bus, an input current of the inverter unit is equal to an output current of the direct current bus, and an output current of the inverter unit is an output current of the inverter power conversion system. As shown in FIG. 6, an input current and an input voltage of the direct current conversion unit i are i_{dc_i} and v_{dc_i} respectively, the sum of the output currents of the m direct current conversion units is iᵢₙ, the input current of the inverter unit is iₒᵤₜ, the output current of the inverter unit includes three phases of currents iₐ, i_{b}, and i_{c}, an output voltage of the inverter unit includes three phases of voltages vₐ, v_{b}, and v_{c}, and a capacitor current of the bus capacitor is i_{bus}. The capacitor current i_{bus} flowing through the bus capacitor is equal to a difference between an input current iᵢₙ of the direct current bus and an output current iₒᵤₜ of the direct current bus. It may be understood that a ripple current of the bus capacitor is an alternating current part of the capacitor current flowing through the bus capacitor. A larger ripple current leads to a larger loss and a shorter service life of the bus capacitor. In this application, a photovoltaic array may provide electrical energy generated through photovoltaic effect, electrical energy stored in an energy storage battery, or the like to the M direct current conversion units in the power conversion system. Voltage/current conversion is implemented by using these direct current conversion units, and the electrical energy is transmitted to the inverter unit through the direct current bus. The inverter unit converts the electrical energy into an alternating current voltage required by a public power grid and outputs the alternating current voltage to the public power grid. Circuit topologies of the direct current conversion unit and the inverter unit in the power conversion system may be isolated circuit topologies or non-isolated circuit topologies. This may be specifically determined according to a requirement in an actual application scenario, and is not limited herein.

In some feasible implementations, in the power conversion system shown in FIG. 6, the controller may be separately coupled to the M direct current conversion units, the bus capacitor, and the inverter unit. The controller may be configured to: control N (where N is less than M and greater than or equal to 1) direct current conversion units in the M direct current conversion units to adjust output currents/input currents when an amplitude of the ripple current of the bus capacitor is greater than a first threshold, to decrease the amplitude of the ripple current of the bus capacitor. When the amplitude of the ripple current of the bus capacitor is equal to the first threshold, the controller may control the N direct current conversion units to adjust the output currents/the input currents, or may maintain original control logic. This may be specifically specified according to an actual application scenario. That is, when the amplitude of the ripple current of the bus capacitor is equal to all thresholds (including the thresholds mentioned below), execution steps of the controller are not limited in this application. Whether the amplitude of the ripple current of the bus capacitor is greater than the first threshold may be actually determined based on whether the output current or an input current of the power conversion system is greater than a second threshold. The output current of the power conversion system may be the output current of the inverter unit included in the power conversion system, and the input current of the power conversion system may be a sum of input currents of the M direct current conversion units included in the power conversion system. In other words, when the output current of the inverter unit or the sum of the input currents of the M direct current conversion units is greater than the second threshold, the controller determines that the ripple current of the bus capacitor is greater than the first threshold. In this way, the N direct current conversion units in the M direct current conversion units may be controlled to adjust the output currents/the input currents, to decrease the amplitude of the ripple current of the bus capacitor. It may be understood that the second threshold may include a first output current threshold and a first input current threshold. The two thresholds may be set to different values, or may be set to a same value. This is specifically determined according to an actual application scenario, and is not limited in this application. The first output current threshold and the first input current threshold may be respectively used for comparison with the output current of the inverter unit and the sum of the input currents of the M direct current conversion units. In other words, when the output current of the inverter unit is greater than the first output current threshold, or when the sum of the input currents of the M direct current conversion units is greater than the first input current threshold, the controller may be configured to control the N direct current conversion units in the M direct current conversion units to adjust the output currents/the input currents thereof, to suppress the ripple current of the bus capacitor. For ease of description, the following uses an example in which the output current of the inverter unit is greater than the second threshold for description. As shown in FIG. 6, when the output current of the inverter unit is greater than the second threshold, it may be determined that the amplitude of the ripple current of the bus capacitor is greater than the first threshold. In this case, the controller in the power conversion system may control one or some of the direct current conversion unit 1 to the direct current conversion unit m to adjust an output current/an input current, for example, control the direct current conversion unit 1 to adjust an output current or an input current thereof, to adjust a ripple of the input current of the direct current bus, thereby decreasing the amplitude of the ripple current of the bus capacitor, and suppressing the ripple current of the bus capacitor. It may be understood that, that the output current of the inverter unit is greater than the second threshold may mean that all the three phases of the currents (iₐ, i_{b}, and i_{c} shown in FIG. 6) in the output current of the inverter unit are greater than the second threshold, that is, the three phases of the currents are increased synchronously; or may mean that a sum of the three phases of the currents in the output current of the inverter unit is greater than the second threshold. This is not limited in this application.

Specifically, the power conversion system may include one controller. The controller may be a main control unit in the power conversion system. In other words, the controller is a functional unit independent of the direct current conversion unit, the bus capacitor, and the inverter unit in the power conversion system. In this case, the controller may be separately coupled to the M direct current conversion units, the bus capacitor, and the inverter unit, and may be configured to: obtain the output current of the inverter unit and the input currents of the M direct current conversion units in the power conversion system shown in FIG. 6; and when the output current of the inverter unit or the sum of the input currents of the M direct current conversion units is greater than the second threshold, determine that the amplitude of the ripple current of the bus capacitor is greater than the first threshold, and control the N direct current conversion units in the M direct current conversion units to adjust the output currents/the input currents, to decrease the amplitude of the ripple current of the bus capacitor. Optionally, in the power conversion system shown in FIG. 6, there may be a plurality of controllers. For example, each direct current conversion unit and the inverter unit in the power conversion system may both correspond to one controller, and these controllers may implement information exchange with a main controller in the power conversion system. During specific implementation, information exchange between these controllers and the main controller may be communication through a control bus, wireless communication, or the like. This may be specifically determined according to an actual application scenario, so that the operation is flexible, and applicability is high. A controller corresponding to any direct current conversion unit/the inverter unit in the power conversion system may be a functional unit independent of the direct current conversion unit/the inverter unit, or the controller corresponding to the any direct current conversion unit/the inverter unit may be a functional unit in the direct current conversion unit/the inverter unit. In other words, the controller may be integrated into the direct current conversion unit/the inverter corresponding to the controller. This may be specifically determined according to an actual application scenario, and is not limited herein. In this case, any controller may be configured to: obtain an input current/an output current of a direct current conversion unit/the inverter unit corresponding to the controller, and transmit the current value to a main controller in the power conversion system. When the output current of the inverter unit or the sum of the input currents of the M direct current conversion units is greater than the second threshold, the main controller controls the N direct current conversion units in the M direct current conversion units to adjust the output currents/the input currents, to decrease the amplitude of the ripple current of the bus capacitor.

In some feasible implementations, when the controller controls, based on the control block diagram shown in FIG. 4 or FIG. 5, the direct current conversion unit to work, it may be considered that the direct current conversion unit works in a normal mode. In this application, when the controller controls the direct current conversion unit to adjust the output current/the input current to decrease the amplitude of the ripple current of the bus capacitor, it may be considered that the direct current conversion unit works in a ripple current suppression mode. In other words, when the amplitude of the ripple current of the bus capacitor exceeds a limit (for example, greater than the first threshold), the controller may control the N direct current conversion units in the M direct current conversion units to switch from the normal mode to the ripple current suppression mode, so that the N direct current conversion units adjust output currents or input currents thereof, thereby decreasing the amplitude of the ripple current of the bus capacitor. For ease of description, the following uses an example in which the direct current conversion unit adjusts the output current for description. A process in which the controller controls working modes of the N direct current conversion units to switch from the normal mode to the ripple current suppression mode may include but is not limited to the following manners:
Manner 1: The controller controls the N direct current conversion units to simultaneously switch from the normal mode to the ripple current suppression mode. Values of N are in one-to-one correspondence with a plurality of current ranges, and the correspondence may be obtained from an experiment or test data. In other words, the value of N may be determined based on a current range of the amplitude of the ripple current (which may be essentially represented as the output current of the inverter unit or the sum of the input currents of the M direct current conversion units) of the bus capacitor. For ease of description, the following uses an example in which the output current of the inverter unit represents the amplitude of the ripple current of the bus capacitor for description. For example, a current output current of the inverter unit is obtained. When the current output current of the inverter unit is greater than the second threshold, the output current of the inverter unit is compared with the plurality of current ranges, and the N direct current conversion units are controlled, based on a current range of the output current of the inverter unit, to simultaneously switch from the normal mode to the ripple current suppression mode, so that the amplitude of the current ripple of the bus capacitor can be decreased to a value that meets a requirement when the output current of the inverter unit falls in different current ranges. For ease of description, three current ranges (A1 to A2, A2 to A3, and above A3, where A3>A2, A2>A1, and A1 is greater than or equal to the second threshold) are used as an example for description. If the output current of the inverter unit is in the range of A1 to A2, N1 direct current conversion units are directly controlled to switch from the normal mode to the ripple current suppression mode. If the output current of the inverter unit is in the range of A2 to A3, N2 (N2>N1) direct current conversion units are directly controlled to switch from the normal mode to the ripple current suppression mode. If the output current of the inverter unit is above A3, N3 (M>N3>N2) direct current conversion units are directly controlled to switch from the normal mode to the ripple current suppression mode. It may be understood that, when the output current of the inverter unit is greater than the second threshold, a corresponding quantity of direct current conversion units are controlled, based on a value of the output current of the inverter unit, to simultaneously work in the ripple current suppression mode. That is, these direct current conversion units are controlled to adjust output currents thereof together. In this way, the amplitude of the current ripple of the bus capacitor may be decreased as soon as possible to meet a requirement, thereby ensuring suppression effect on the ripple current of the bus capacitor.
Manner 2: The controller controls the N direct current conversion units to sequentially switch from the normal mode to the ripple current suppression mode. Specifically, when the amplitude of the ripple current of the bus capacitor is greater than a third threshold, the controller controls K direct current conversion units in the N direct current conversion units to adjust output currents/input currents, to decrease the amplitude of the ripple current of the bus capacitor. In this case, the K direct current conversion units work in the ripple current suppression mode. The third threshold is greater than or equal to the first threshold, and K is less than N. Further, when the K direct current conversion units work in the ripple current suppression mode, if it is detected that the output current of the power conversion system is greater than a fourth threshold, the controller may control T other direct current conversion units in the N direct current conversion units except the K direct current conversion units to switch from the normal mode to the ripple current suppression mode, to further decrease the ripple current of the bus capacitor. The fourth threshold is greater than or equal to the third threshold. A sum of T and K is less than M, and T is greater than or equal to 1. In other words, the controller may control the T direct current conversion units other than the K direct current conversion units to adjust output currents/input currents when the controller controls the K direct current conversion units to adjust the output currents to decrease the amplitude of the ripple current of the bus capacitor, and the amplitude of the ripple current of the bus capacitor is greater than the fourth threshold, to decrease the ripple current of the bus capacitor. It may be understood that comparison between the amplitude of the ripple current of the bus capacitor and each of the third threshold and the fourth threshold may be respectively reflected by comparison between the output current of the inverter unit or the sum of the input currents of the M direct current conversion units and each of a fifth threshold (where the fifth threshold corresponds to the third threshold) and a sixth threshold (where the sixth threshold corresponds to the fourth threshold). In this way, the amplitude of the ripple current of the bus capacitor may be decreased, and the N direct current conversion units are sequentially controlled to switch from the normal mode to the ripple current suppression mode, to gradually influence an input current of the bus capacitor in the power conversion system, thereby suppressing the ripple current of the bus capacitor. In addition, the plurality of direct current conversion units are controlled to gradually switch to the ripple current suppression mode, so that when the ripple current of the bus capacitor is suppressed, as many direct current conversion units as possible can be controlled to still work in the normal mode, to increase an overall power of the power conversion system.

In some feasible implementations, when the amplitude of the ripple current of the bus capacitor is greater than the first threshold, if the controller controls the N direct current conversion units to sequentially switch from the normal mode to the ripple current suppression mode, the controller may further control, in a timely manner based on a real-time change of the amplitude of the ripple current of the bus capacitor, the N direct current conversion units to reversely and sequentially switch from the ripple current suppression mode back to the normal mode. Specifically, when the K direct current conversion units and the T other direct current conversion units in the N direct current conversion units except the K direct current conversion units all work in the ripple current suppression mode, if it is detected that the amplitude of the ripple current of the bus capacitor is less than the fourth threshold, the controller may control one or more of the T other direct current conversion units to switch from the ripple current suppression mode back to the normal mode. In other words, the controller may control, based on a reference control signal, the T direct current conversion units to work when the T other direct current conversion units are controlled to adjust the output currents to suppress the ripple current of the bus capacitor, and the amplitude of the ripple current of the bus capacitor is less than the fourth threshold, to adjust an input current/an input voltage of at least one direct current conversion unit. The reference control signal is obtained based on a preset current reference or a preset voltage reference. The reference control signal may be the control signal shown in FIG. 4 or FIG. 5. It may be understood that a reference control signal corresponding to each direct current conversion unit is obtained based on a preset current reference or a preset voltage reference corresponding to the direct current conversion unit. The controller controls, based on the reference control signal, a direct current conversion unit to work, that is, controls, based on the control block diagram shown in FIG. 4 or FIG. 5, the direct current conversion unit to work. In this case, the direct current conversion unit works in the normal mode. In this way, the controller may: correspondingly control a working status of the direct current conversion unit based on the real-time change of the amplitude of the ripple current of the bus capacitor; and control more direct current conversion units to work in the ripple current suppression mode when the amplitude of the ripple current of the bus capacitor is relatively large, to enhance suppression effect on the ripple current of the bus capacitor; or control a direct current conversion unit working in the ripple current suppression mode to switch back to the normal mode when the amplitude of the ripple current of the bus capacitor is relatively small, to ensure an overall output power of the power conversion system. In this application, when the output power of the power conversion system is not significantly decreased, the ripple current of the bus capacitor can be suppressed, a loss of the bus capacitor can be reduced, and working efficiency and long-term reliability of the power conversion system can be effectively improved.

Further, when the K direct current conversion units work in the ripple current suppression mode, if it is detected that the amplitude of the ripple current of the bus capacitor is less than the third threshold, the controller may control one or more of the K direct current conversion units to switch from the ripple current suppression mode back to the normal mode. In other words, the controller may control, based on the reference control signal, the one or more of the K direct current conversion units to work when the K direct current conversion units are controlled to adjust the output currents to decrease the amplitude of the ripple current of the bus capacitor, and the amplitude of the ripple current of the bus capacitor is less than the third threshold, to adjust input currents/ input voltages of the one or more direct current conversion units. In this case, the controller controls, based on the control block diagram shown in FIG. 4 or FIG. 5, the one or more direct current conversion units to work. The one or more direct current conversion units work in the normal mode. In embodiments of this application, when the plurality of direct current conversion units already work in the ripple current suppression mode, the controller may: control more direct current conversion units to switch to the ripple current suppression mode when the amplitude of the ripple current of the bus capacitor is relatively large, to improve suppression effect on the ripple current of the bus capacitor; or sequentially control some direct current conversion units working in the ripple current suppression mode to switch back to the normal mode when the amplitude of the ripple current of the bus capacitor is relatively small, to suppress the ripple current of the bus capacitor and increase the output power of the power conversion system. In this way, when the output power of the power conversion system is not significantly decreased, the ripple current of the bus capacitor can be suppressed, thereby achieving a balance between working efficiency and long-term reliability of the power conversion system.

With reference to FIG. 6, the following specifically describes a process in which the controller controls the plurality of direct current conversion units to switch between the normal mode and the ripple current suppression mode with the real-time change of the amplitude of the ripple current (this paragraph uses an example in which the output current of the inverter unit represents the amplitude of the ripple current of the bus capacitor for description) of the bus capacitor. As shown in FIG. 6, it is assumed that the power conversion system includes M direct current conversion units, and the M direct current conversion units include a direct current conversion unit 1, ..., a direct current conversion unit i, ..., and a direct current conversion unit m, where m is an integer greater than or equal to 2. A process in which the controller controls N (for example, N=2) direct current conversion units in the M direct current conversion units to sequentially switch from the normal mode to the ripple current suppression mode, and sequentially switch from the ripple current suppression mode back to the normal mode may include: When the output current of the inverter unit is less than a current threshold A1, the controller controls the M direct current conversion units to all work in the normal mode. When the output current of the inverter unit is greater than a current threshold A1, the controller may control the direct current conversion unit 1 to switch from the normal mode to the ripple current suppression mode. When the direct current conversion unit 1 works in the ripple current suppression mode and the output current of the inverter unit is greater than a current threshold A2 (where the current threshold A2 is greater than or equal to the current threshold A1), the direct current conversion unit 2 may continue to be controlled to switch from the normal mode to the ripple current suppression mode. When both the direct current conversion unit 1 and the direct current conversion unit 2 work in the ripple current suppression mode, and the output current of the inverter unit falls within a range from the current threshold A1 to the current threshold A2, the direct current conversion unit 2 may be controlled to switch from the ripple current suppression mode back to the normal mode. When the direct current conversion unit 1 works in the ripple current suppression mode and the output current of the inverter unit is less than the current threshold A1, the direct current conversion unit 1 may be controlled to switch from the ripple current suppression mode back to the normal mode.

In some feasible implementations, when the amplitude of the ripple current of the bus capacitor is greater than the first threshold, the N direct current conversion units in the M direct current conversion units are controlled to adjust the output currents/the input currents, so that the N direct current conversion units output currents in a direction opposite to a direction of the ripple current of the bus capacitor. In other words, a current direction of the output currents of the N direct current conversion units is opposite to the direction of the ripple current of the bus capacitor. In this way, after the output currents of the N direct current conversion units are superposed on the ripple current of the bus capacitor, a part that is of the ripple current of the bus capacitor and that is in an opposite direction of and in a same amplitude as the output current is canceled, so that the amplitude of the ripple current of the bus capacitor is decreased, and the ripple current of the bus capacitor is suppressed.

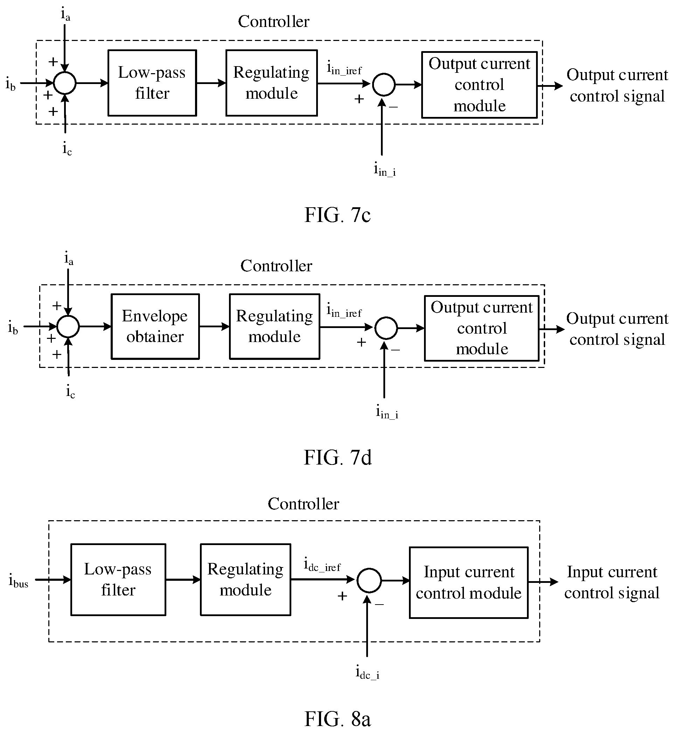

With reference to FIG. 7a to FIG. 7d and FIG. 8a to FIG. 8d, the following specifically describes a process in which the controller in the power conversion system controls the direct current conversion unit to work in the ripple current suppression mode, namely, a process in which the controller controls the direct current conversion unit to adjust the output current/the input current to suppress the ripple current of the bus capacitor.

In some feasible implementations, the controller in the power conversion system may control the output current of the direct current conversion unit based on the control signal, to suppress the ripple current of the bus capacitor. Specifically, the controller may be configured to: generate an output current control signal, and control, based on the output current control signal, the N direct current conversion units to work, to adjust the output currents of the N direct current conversion units. It may be understood that, when the amplitude of the ripple current of the bus capacitor is greater than the first threshold, the ripple current flowing through the bus capacitor is relatively large. In this case, the controller generates the output current control signal to control one or some direct current conversion units to work to adjust an output current thereof, to adjust the ripple of the input current of the direct current bus. In this way, when the output power of the power conversion system is not significantly decreased, the ripple current of the bus capacitor is suppressed, a loss of the bus capacitor (especially an electrolytic capacitor) is reduced, and long-term reliability of the power conversion system is improved.

In some feasible implementations, the controller may obtain a first output current reference based on a capacitor current of the bus capacitor, and generate the output current control signal based on the first output current reference and sampled output current values of the N direct current conversion units. The first output current reference may be a current signal in a direction opposite to the direction of the ripple current of the bus capacitor. The output current control signal is generated based on the first output current reference to control the N direct current conversion units to adjust the output currents, so that the N direct current conversion units output currents in the direction opposite to the direction of the ripple current of the bus capacitor. In this way, after the output currents of the N direct current conversion units are superposed on the ripple current of the bus capacitor, a part that is of the ripple current of the bus capacitor and that is in an opposite direction of and in a same amplitude as the output current is canceled, so that the amplitude of the ripple current of the bus capacitor is decreased. It may be understood that, if N is greater than 1, there may be N output current control signals. For any one of the N direct current conversion units, an output current control signal corresponding to the direct current conversion unit may be generated based on the first output current reference and a sampled output current value of the direct current conversion unit. The output current control signal may be used for controlling the direct current conversion unit to adjust an output current. In this application, the capacitor current of the bus capacitor is obtained through sampling, so that a value of the ripple current included in the capacitor current of the bus capacitor can be accurately obtained, and the first output current reference is generated based on the capacitor current of the bus capacitor. Correspondingly, the output current control signal generated based on the first current reference can effectively decrease the amplitude of the ripple current of the bus capacitor, and ensure good ripple current suppression effect.

Specifically, a process in which the controller obtains the first output current reference based on the capacitor current of the bus capacitor includes different manners. For example, the controller may obtain a low-frequency component of the capacitor current based on the capacitor current of the bus capacitor, and obtain the first output current reference based on the low-frequency component of the capacitor current. The low-frequency component is a relative concept, and may include a part that has a relatively low frequency and occupies a relatively large percentage in an alternating current component of the capacitor current. This may be specifically determined according to an actual application scenario. As shown in FIG. 7a, the controller may include a low-pass filter and a regulating module. The low-pass filter filters out a high-frequency component in the capacitor current to obtain the low-frequency component of the capacitor current. Further, the regulating module regulates (for example, performing processing such as reverse and proportional control on a current) the low-frequency component of the capacitor current to obtain the first output current reference. As shown in FIG. 7a, it is assumed that the controller in the power conversion system controls a direct current conversion unit i (where the direct current conversion unit is one of the N direct current conversion units) to work in the ripple current suppression mode. In this process, the controller may obtain a capacitor current i_{bus} of the bus capacitor through sampling, and then the low-pass filter and the regulating module process the capacitor current i_{bus} to obtain a first output current reference i_{in_iref}. Then, an output current control module generates an output current control signal based on the first output current reference i_{in_iref} and a sampled output current value i_{in_i} of the direct current conversion unit i. The controller controls, based on the output current control signal, the direct current conversion unit i to adjust the output current (i_{in_i} shown in FIG. 6). Herein, the low-frequency component of the capacitor current of the bus capacitor may accurately reflect the current ripple of the bus capacitor. The controller obtains the first output current reference based on the low-frequency component of the capacitor current, generates the output current control signal, and controls, based on the output current control signal, the direct current conversion unit to adjust the output current. This can effectively suppress a ripple of the output current of the direct current conversion unit, thereby effectively suppressing the ripple current of the bus capacitor. For another example, the controller may obtain an envelope of the capacitor current based on the capacitor current of the bus capacitor, and obtain the first output current reference based on the envelope of the capacitor current. As shown in FIG. 7b, the controller may include an envelope obtainer and a regulating module. The envelope obtainer obtains the envelope of the capacitor current, and then the regulating module regulates the envelope of the capacitor current to obtain the first output current reference. A process in which the controller obtains the first output current reference in this manner is similar to the process in which the controller obtains the first output current reference in the manner shown in FIG. 7a. For details, refer to the text description corresponding to FIG. 7a. Details are not described herein again. Because the envelope of the capacitor current of the bus capacitor can more accurately reflect the current ripple of the bus capacitor, and the first output current reference may be obtained in this manner to generate the output current control signal to control the output current of the direct current conversion unit. This can more effectively suppress the current ripple of the bus capacitor, help reduce a loss of the bus capacitor, and improve long-term reliability of the power conversion system.

Optionally, in some feasible implementations, the controller in the power conversion system may obtain a second output current reference based on the output current of the inverter unit included in the power conversion system, and generate the output current control signal based on the second output current reference and sampled output current values of the N direct current conversion units. The second output current reference may be a current signal in a direction opposite to the direction of the ripple current of the bus capacitor. The output current control signal is generated based on the second output current reference to control the N direct current conversion units to adjust the output currents, so that the N direct current conversion units output currents in a direction opposite to the direction of the ripple current of the bus capacitor. In this way, after the output currents of the N direct current conversion units are superposed on the ripple current of the bus capacitor, a part that is of the ripple current of the bus capacitor and that is in an opposite direction of and in a same amplitude as the output current is canceled, so that the amplitude of the ripple current of the bus capacitor is decreased. Specifically, the controller in the power conversion system may obtain the second output current reference based on the sum of the three phases of the currents in the output current of the inverter unit. The sum of the three phases of the currents in the output current of the inverter unit may reflect the current ripple of the bus capacitor, and the controller obtains the second output current reference based on the output current of the inverter unit, and generates the output current control signal based on the second output current reference to control the direct current conversion unit to adjust the output current. An extra module for sampling a capacitor current of the bus capacitor may not be added, and an existing module for sampling an output current of the power conversion system may still be used to suppress the current ripple of the bus capacitor. This reduces circuit costs, and reduces circuit complexity.

Specifically, the controller in the power conversion system may obtain the second output current reference in a plurality of manners. For example, the controller may obtain a low-frequency component of the sum of the three phases of the currents based on the sum of the three phases of the currents in the output current of the inverter unit, and obtain the second output current reference based on the low-frequency component of the sum of the three phases of the currents. As shown in FIG. 7c, the controller may include a low-pass filter and a regulating module. The low-pass filter performs filtering to obtain the low-frequency component of the sum of the three phases of the currents, and then the regulating module regulates (for example, performing processing such as reverse and proportional control on a current) the low-frequency component of the sum of the three phases of the currents to obtain the second output current reference. As shown in FIG. 7c, it is assumed that the controller in the power conversion system controls a direct current conversion unit i to work in the ripple current suppression mode. In this process, the controller may obtain three phases of currents iₐ, i_{b}, and i_{c} in the output current of the inverter unit through sampling, and the low-pass filter and the regulating module process a sum of the three phases of the currents to obtain a second output current reference i_{in_iref}. Then, an output current control module generates an output current control signal based on the second output current reference i_{in_iref} and a sampled output current value i_{in_i} of the direct current conversion unit i. The controller controls, based on the output current control signal, the direct current conversion unit i to adjust the output current (i_{in_i} shown in FIG. 6). Herein, the sum of the three phases of the currents in the output current of the inverter unit may reflect the current ripple of the bus capacitor, and the low-frequency component of the sum of the three phases of the currents may further accurately reflect the current ripple of the bus capacitor. The controller obtains the second output current reference based on the low-frequency component of the sum of the three phases of the currents, generates the output current control signal, and controls, based on the output current control signal, the direct current conversion unit to adjust the output current. This can decrease the amplitude of the ripple current of the bus capacitor, and effectively suppress the ripple current of the bus capacitor. In addition, an extra module for sampling a capacitor current does not need to be added, which helps reduce circuit costs. Alternatively, the controller in the power conversion system may further obtain an envelope of the sum of the three phases of the currents based on the sum of the three phases of the currents in the output current of the inverter unit, and obtain the second output current reference based on the envelope of the sum of the three phases of the currents. As shown in FIG. 7d, the controller may include an envelope obtainer and a regulating module. The envelope obtainer obtains the envelope of the sum of the three phases of the currents in the output current of the inverter unit, and then the regulating module regulates the envelope of the sum of the three phases of the currents to obtain the second output current reference. A process in which the controller obtains the second output current reference in this manner is similar to the process in which the controller obtains the second output current reference in the manner shown in FIG. 7c. For details, refer to the text description corresponding to FIG. 7c. Details are not described herein again. Herein, the envelope of the sum of the three phases of the currents in the output current of the inverter unit may more accurately reflect the current ripple of the bus capacitor, and the second output current reference is obtained in this manner to generate the output current control signal to control the output current of the direct current conversion unit. This can more effectively suppress the current ripple of the bus capacitor, help reduce a loss of the bus capacitor, improve long-term reliability of the power conversion system, and does not increase extra circuit costs. Therefore, applicability is high.

In a feasible implementation, the controller in the power conversion system may control the input current of the direct current conversion unit based on the control signal, and indirectly control the output current of the direct current conversion unit by controlling the input current of the direct current conversion unit, to suppress the ripple current of the bus capacitor. **Specifically,** the controller may be configured to: generate an input current control signal, and control, based on the input current control signal, the N direct current conversion units to work, to adjust the input currents of the N direct current conversion units. It may be understood that the input current and the output current of the direct current conversion unit meet a preset proportion relationship. The preset proportion relationship may be determined according to a load requirement or a circuit element requirement in an actual application scenario. Therefore, the input current of the direct current conversion unit is controlled, so that the output current of the direct current conversion unit may be indirectly controlled. In this way, the ripple current of the bus capacitor can be finally suppressed, a service life of the bus capacitor can be prolonged, and long-term reliability of the power conversion system can be ensured.

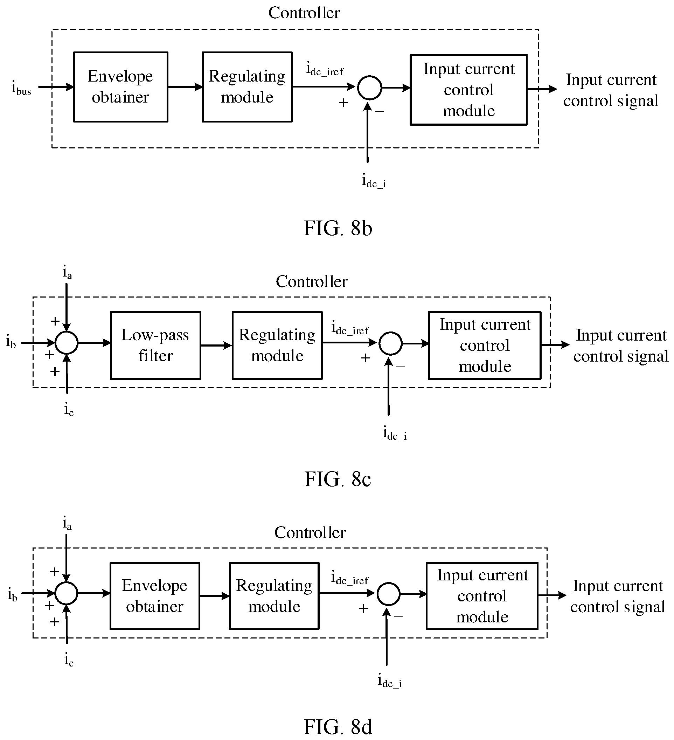

In some feasible implementations, the controller in the power conversion system may obtain a first input current reference based on a capacitor current of the bus capacitor, and generate the input current control signal based on the first input current reference and sampled input current values of the N direct current conversion units. There are a plurality of manners of obtaining the first input current reference based on the capacitor current of the bus capacitor. For example, the controller may obtain a low-frequency component of the capacitor current based on the capacitor current, and obtain the first input current reference based on the low-frequency component of the capacitor current. As shown in FIG. 8a, the controller may include a low-pass filter and a regulating module. The low-pass filter filters out a high-frequency component in the capacitor current to obtain the low-frequency component of the capacitor current, and then the regulating module regulates (for example, performing processing such as reverse and proportional control on a current) the low-frequency component of the capacitor current to obtain the first input current reference. It may be understood that, in the process of obtaining the first input current reference, the regulating module performs proportional control on the low-frequency component of the capacitor current based on a second proportion. However, in the process of obtaining the first output current reference in FIG. 7a, the regulating module performs proportional control on the low-frequency component of the capacitor current based on a first proportion. The first proportion and the second proportion may have different values, and the second proportion may be obtained based on the first proportion and the preset proportion relationship. As shown in FIG. 8a, it is assumed that the controller in the power conversion system controls a direct current conversion unit i to work in the ripple current suppression mode. In this process, the controller may obtain a capacitor current i_{bus} of the bus capacitor through sampling, and then the low-pass filter and the regulating module process the capacitor current i_{bus} to obtain a first input current reference i_{dc_iref}. Then, an input current control module generates an input current control signal based on the first input current reference i_{dc_iref} and a sampled input current value i_{dc_i} of the direct current conversion unit i. The controller controls, based on the input current control signal, the direct current conversion unit i to adjust the input current (i_{dc_i} shown in FIG. 6). Alternatively, the controller may obtain an envelope of the capacitor current based on the capacitor current of the bus capacitor, and obtain the first input current reference based on the envelope of the capacitor current. As shown in FIG. 8b, the controller may include an envelope obtainer and a regulating module. The envelope obtainer obtains the envelope of the capacitor current, and then the regulating module regulates the envelope of the capacitor current to obtain the first input current reference. A process in which the controller obtains the first input current reference in this manner is similar to the process in which the controller obtains the first input current reference in the manner shown in FIG. 8a. For details, refer to the text description corresponding to FIG. 8a. Details are not described herein again. Herein, the low-frequency component or the envelope of the current of the bus capacitor can accurately reflect the current ripple of the bus capacitor, and the first input current reference is obtained in these manners to generate the input current control signal to control the input current of the direct current conversion unit, and further indirectly control the output current of the direct current conversion unit. This can effectively suppress the current ripple of the bus capacitor, help reduce a loss of the bus capacitor, and improve long-term reliability of the power conversion system.

Optionally, in some feasible implementations, the controller may obtain a second input current reference based on the output current of the inverter unit, and generate the input current control signal based on the second input current reference and sampled input current values of the N direct current conversion units. Specifically, the controller may obtain a low-frequency component of the sum of the three phases of the currents based on the sum of the three phases of the currents in the output current of the inverter unit, and obtain the second input current reference based on the low-frequency component of the sum of the three phases of the currents. As shown in FIG. 8c, it is assumed that the controller in the power conversion system controls a direct current conversion unit i to work in the ripple current suppression mode. In this process, the controller may obtain three phases of currents iₐ, i_{b}, and i_{c} in the output current of the inverter unit through sampling, and the low-pass filter and the regulating module process a sum of the three phases of the currents to obtain a second input current reference i_{dc_iref}. Then, an input current control module generates an input current control signal based on the second input current reference i_{dc_iref} and a sampled input current value i_{dc_i} of the direct current conversion unit i. The controller controls, based on the input current control signal, the direct current conversion unit i to adjust the input current (i_{dc_i} shown in FIG. 6). Alternatively, the controller may obtain an envelope of the sum of the three phases of the currents based on the sum of the three phases of the currents in the output current of the inverter unit, and obtain the second input current reference based on the envelope of the sum of the three phases of the currents. A process in which the controller shown in FIG. 8d obtains the second input current reference is similar to the process in which the controller obtains the second input current reference in the manner shown in FIG. 8c. The envelope obtainer replaces the low-pass filter to process the sum of the three phases of the currents, and other processes are roughly the same. Therefore, reference may be made to the description corresponding to FIG. 8c, and details are not described herein again. The sum of the three phases of the currents in the output current of the inverter unit may reflect the current ripple of the bus capacitor, the second input current reference is obtained based on the output current of the power conversion system, and the input current control signal is generated based on the second input current reference to control the direct current conversion unit to adjust the input current, so that the direct current conversion unit can be indirectly controlled to adjust the output current. In this way, a module for sampling a capacitor current of the bus capacitor may not be added, and an existing module for sampling an input current of the power conversion system may still be used to suppress the current ripple of the bus capacitor. This helps reduce circuit costs, and reduce circuit complexity.

In this application, when the output power or an input power of the power conversion system is increased, and the amplitude of the ripple current of the bus capacitor is greater than the first threshold, the controller controls, based on the output current control signal/the input current control signal, one or some direct current conversion units included in the power conversion system to adjust an output current/an input current thereof, to decrease the amplitude of the ripple current of the bus capacitor, and controls other direct current conversion units to maintain original power output. In this way, when the output power of the power conversion system is not significantly decreased, the ripple current of the bus capacitor is suppressed, a service life of the capacitor is prolonged, and long-term reliability of the system is improved. The output current control signal/the input current control signal may be obtained based on the capacitor current of the bus capacitor, or may be obtained based on the sum of the three phases of the currents in the output current of the power conversion system. Both the capacitor current and the sum of the three phases of the currents can accurately reflect the current ripple of the bus capacitor. Therefore, according to this application, suppression effect on the ripple current of the bus capacitor can be improved, a loss of the bus capacitor can be reduced, and long-term reliability of the power conversion system can be improved. In addition, in this application, the controller may: further sequentially control the plurality of direct current conversion units to adjust output currents/input currents to decrease the amplitude of the ripple current of the bus capacitor when the amplitude of the ripple current of the bus capacitor is continuously greater than the first threshold; or reversely and sequentially control, based on the reference control signal, the plurality of direct current conversion units to work in the normal mode when the amplitude of the ripple current of the bus capacitor becomes smaller, so that these direct current conversion units restore normal power output. In this way, when the ripple current of the bus capacitor is suppressed, as many direct current conversion units as possible may be controlled to still work normally, to improve an overall power of the power conversion system.

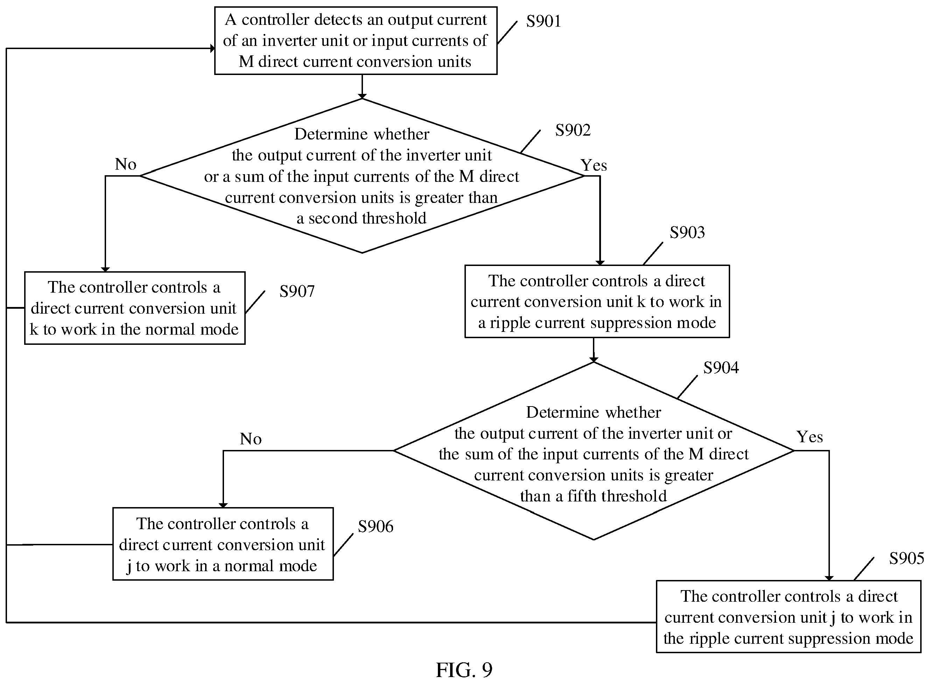

FIG. 9 is a schematic flowchart of a ripple current suppression method of a power conversion system according to this application. The ripple current suppression method according to this application is applicable to a controller in the power conversion system. The power conversion system further includes M direct current conversion units, a bus capacitor, and an inverter unit. An input end of each of the M direct current conversion units is connected to one direct current power supply. Output ends of the M direct current conversion units are connected in parallel and then connected to an input end of the inverter unit. The bus capacitor is connected in parallel to the input end of the inverter unit. An output end of the inverter unit is configured to connect to a power grid or a load. A structure of the power conversion system may be shown in FIG. 6, and is applied to the application scenario shown in FIG. 1 or FIG. 2. The method may include but is not limited to the following steps.

Step S901: The controller detects an output current of the inverter unit or input currents of the M direct current conversion units.

The output current of the inverter unit may include the three phases of the currents iₐ, i_{b}, and i_{c} shown in FIG. 6. The input currents of the M direct current conversion units may include an input current of each of the M direct current conversion units, that is, include the currents i_{dc_1}, ..., i_{dc_i}, ..., and i_{dc_m} shown in FIG. 6. The controller may detect the output current of the inverter unit or the input currents of the M direct current conversion units in real time, to determine, based on the output current of the inverter unit or a sum of the input currents of the M direct current conversion units, whether an amplitude of a ripple current of the bus capacitor exceeds a limit.

Step S902: Determine whether the output current of the inverter unit or the sum of the input currents of the M direct current conversion units is greater than a second threshold, where if the output current of the inverter unit or the sum of the input currents of the M direct current conversion units is greater than the second threshold, perform step S903; or if the output current of the inverter unit or the sum of the input currents of the M direct current conversion units is not greater than the second threshold, perform step S907.

If the controller detects the output current of the inverter unit when step S901 is performed, the controller determines whether the output current of the inverter unit is greater than the second threshold. The second threshold herein is actually a first output current threshold. Whether the output current of the inverter unit is greater than the second threshold may include a plurality of cases, for example, whether the three phases of the currents iₐ, i_{b}, and i_{c} shown in FIG. 6 are all greater than the second threshold, or whether a sum of the three phases of the currents iₐ, i_{b}, and i_{c} is greater than the second threshold. This may be specifically specified according to an actual application scenario. In this application, an example in which the three phases of the currents iₐ, i_{b}, and i_{c} are all greater than the second threshold is used for description. The controller may obtain the output current of the inverter unit through sampling. When three phases of currents in the output current of the inverter unit are all greater than the second threshold, step S903 is performed; or otherwise, step S907 is performed. If the controller detects the input currents of the M direct current conversion units when step S901 is performed, correspondingly, the controller determines whether the sum of the input currents of the M direct current conversion units is greater than the second threshold. The second threshold herein is actually a first input current threshold. The first input current threshold and the first output current threshold may have different values, or may have a same value. This is not limited in this application. Whether the sum of the input currents of the M direct current conversion units is greater than the second threshold may indicate whether a sum of the input currents i_{dc_1}, ..., i_{dc_i}, ..., and i_{dc_m} of the direct current conversion units shown in FIG. 6 is greater than the second threshold. The controller may obtain the input currents of the M direct current conversion units through sampling. When the sum of the input currents of the M direct current conversion units is greater than the second threshold, step S903 is performed; or otherwise, step S907 is performed. Herein, when the output current of the inverter unit or the sum of the input currents of the M direct current conversion units is greater than the second threshold, it may be determined that the amplitude of the ripple current of the bus capacitor is greater than a first threshold, so that some direct current conversion units may be controlled to work in a ripple current suppression mode (that is, output currents/input currents are adjusted), to decrease the amplitude of the ripple current of the bus capacitor. It may be understood that, in this application, if the controller detects the output current of the inverter unit, the output current of the inverter unit is compared with a threshold in each step of the method; or if the controller detects the input currents of the M direct current conversion units, the sum of the input currents of the M direct current conversion units is compared with a current threshold in each step of the method. Details are not described subsequently.

Step S903: The controller controls a direct current conversion unit k to work in the ripple current suppression mode.

That the direct current conversion unit works in the ripple current suppression mode indicates that the controller controls, based on any one of the control block diagrams shown in FIG. 7a to FIG. 7d or FIG. 8a to FIG. 8d, the direct current conversion unit to work. In other words, the controller controls the direct current conversion unit to adjust an output current/an input current to decrease the amplitude of the ripple current of the bus capacitor. Apart from the ripple current suppression mode, the direct current conversion unit may alternatively work in a normal mode. In other words, the controller controls, based on the control block diagram shown in FIG. 4 or FIG. 5, the direct current conversion unit to work. The direct current conversion unit k may be any direct current conversion unit that works in the normal mode and that is in the power conversion system. It may be understood that, when the output current of the inverter unit or the sum of the input currents of the M direct current conversion units is greater than the second threshold, that is, when it is determined that the amplitude of the ripple current of the bus capacitor is greater than the first threshold, the controller controls one direct current conversion unit working in the normal mode to switch to the ripple current suppression mode, so that when an output power of the power conversion system is not significantly decreased, the amplitude of the ripple current of the bus capacitor is decreased, and a loss of the bus capacitor is reduced.

Specifically, the controller may control, in a plurality of manners, the direct current conversion unit (for example, the direct current conversion unit k) to work in the ripple current suppression mode. In other words, there may be a plurality of manners in which the controller controls the direct current conversion unit to adjust the output current/the input current to suppress a ripple current of the bus capacitor. For example, the controller may generate an output current control signal, and control, based on the output current control signal, a direct current conversion unit to work to adjust an output current of the direct current conversion unit. The controller may obtain a low-frequency component/an envelope of a capacitor current based on the capacitor current of the bus capacitor, obtain a first output current reference based on the low-frequency component/the envelope of the capacitor current, and generate the output current control signal based on the first output current reference and a sampled output current value of the direct current conversion unit. Alternatively, the controller may obtain a low-frequency component/an envelope of a sum of three phases of currents based on the sum of the three phases of the currents in the output current of the inverter unit, obtain a second output current reference based on the low-frequency component/the envelope of the sum of the three phases of the currents, and generate the output current control signal based on the second output current reference and a sampled output current value of the direct current conversion unit. The foregoing process may be shown in FIG. 7a to FIG. 7d.

For another example, the controller may generate an input current control signal, and control, based on the input current control signal, a direct current conversion unit to work to adjust an input current of the direct current conversion unit, thereby indirectly controlling the direct current conversion unit to adjust an output current. The controller may obtain a low-frequency component/an envelope of a capacitor current based on the capacitor current of the bus capacitor, obtain a first input current reference based on the low-frequency component/the envelope of the capacitor current, and generate the input current control signal based on the first input current reference and a sampled input current value of the direct current conversion unit. Alternatively, the controller may obtain a low-frequency component/an envelope of a sum of three phases of currents based on the sum of the three phases of the currents in the output current of the inverter unit, obtain a second input current reference based on the low-frequency component/the envelope of the sum of the three phases of the currents, and generate the input current control signal based on the second input current reference and a sampled input current value of the direct current conversion unit. The foregoing process may be shown in FIG. 8a to FIG. 8d.

Step S904: Determine whether the output current of the inverter unit or the sum of the input currents of the M direct current conversion units is greater than a fifth threshold, where if the output current of the inverter unit or the sum of the input currents of the M direct current conversion units is greater than the fifth threshold, perform step S905; or if the output current of the inverter unit or the sum of the input currents of the M direct current conversion units is not greater than the fifth threshold, perform step S906.

The fifth threshold is greater than or equal to the second threshold. After step S903 is performed, at least one direct current conversion unit in the power conversion system works in the ripple current suppression mode, but the ripple current of the bus capacitor may still be relatively large, and a loss is relatively high. The controller detects the output current of the inverter unit or the input currents of the M direct current conversion units, and determines whether the output current of the inverter unit or the sum of the input currents of the M direct current conversion units is greater than the fifth threshold, to determine whether the amplitude of the ripple current of the bus capacitor is greater than a third threshold (where the third threshold is greater than or equal to the first threshold). The controller controls a working status of another direct current conversion unit based on a determination result of this step, so that suppression effect on the ripple current of the bus capacitor is improved.

Step S905: The controller controls a direct current conversion unit j to work in the ripple current suppression mode.

The direct current conversion unit j may be any direct current conversion unit that currently works in the normal mode and that is in the power conversion system. It may be understood that, when the amplitude of the ripple current (which may be represented as the output current of the inverter unit or the sum of the input currents of the M direct current conversion units) of the bus capacitor is relatively large, the controller sequentially control the direct current conversion unit k and the direct current conversion unit j work in the ripple current suppression mode (that is, switch from the normal mode to the ripple current suppression mode), so that when the ripple current of the bus capacitor is suppressed, as many direct current conversion units as possible can be controlled to still work in the normal mode, to increase an overall power of the power conversion system. Optionally, if the output current of the inverter unit or the sum of the input currents of the M direct current conversion units is greater than a sixth threshold (that is, it is determined that the amplitude of the ripple current of the bus capacitor is greater than a fourth threshold), the controller may further control a direct current conversion unit s to switch from the normal mode to the ripple current suppression mode, to improve suppression effect on the ripple current of the bus capacitor. After step S905 is performed, step S901 may be returned.

Step S906: The controller controls a direct current conversion unit j to work in the normal mode.

In some feasible implementations, if two or more direct current conversion units in the power conversion system work in the ripple current suppression mode, and the two or more direct current conversion units are switched from the normal mode to the ripple current suppression mode one by one, the direct current conversion unit j may be a direct current conversion unit that is recently switched from the normal mode to the ripple current suppression mode. Optionally, the direct current conversion unit j may alternatively be any one of the two or more direct current conversion units. This is not limited in this application. It may be understood that the direct current conversion unit j in step S906 and the direct current conversion unit j in step S905 are not specifically a same direct current conversion unit, and may be different direct current conversion units. Herein, j is merely a symbol. In other words, the direct current conversion unit j in step S906 may alternatively be represented by a direct current conversion unit p or the like. In this way, when the output current of the inverter unit or the sum of the input currents of the M direct current conversion units gradually is decreased to be less than the fifth threshold (that is, the amplitude of the ripple current of the bus capacitor is decreased to be less than the third threshold), a quantity of direct current conversion units working in the ripple current suppression mode may correspondingly decrease gradually, so that when the ripple current of the bus capacitor is suppressed, as many direct current conversion units as possible can be controlled to still work in the normal mode, to improve an overall power of the power conversion system. After step S906 is performed, step S901 may be returned.

Step S907: The controller controls a direct current conversion unit k to work in the normal mode.

In some feasible implementations, if one or more direct current conversion units in the power conversion system work in the ripple current suppression mode, the direct current conversion unit k may be a direct current conversion unit that is recently switched from the normal mode to the ripple current suppression mode. Optionally, the direct current conversion unit k may alternatively be any one of the one or more direct current conversion units. This is not limited in this application. It may be understood that the direct current conversion unit k in step S907 and the direct current conversion unit k in step S903 are not specifically a same direct current conversion unit, and may be different direct current conversion units. Herein, k is merely a symbol. In other words, the direct current conversion unit k in step S907 may alternatively be represented by a direct current conversion unit q or the like. In this way, when the output current of the inverter unit or the sum of the input currents of the M direct current conversion units gradually is decreased to be less than the second threshold (that is, the amplitude of the ripple current of the bus capacitor is decreased to be less than the first threshold), a quantity of direct current conversion units working in the ripple current suppression mode may correspondingly decrease. When the amplitude of the ripple current of the bus capacitor is decreased to a value that meets a requirement, the direct current conversion units that originally work in the ripple current suppression mode are controlled to switch back to the normal mode, to restore normal power output, and increase an overall power of the power conversion system. After step S907 is performed, step S901 may be returned.

In this application, when the output power or an input power of the power conversion system is increased, and the amplitude of the ripple current of the bus capacitor is greater than the first threshold (that is, the output current of the inverter unit or the sum of the input currents of the M direct current conversion units included in the power conversion system is greater than the second threshold), the controller controls one or some direct current conversion units included in the power conversion system to adjust an output current/an input current thereof, to decrease the amplitude of the ripple current of the bus capacitor, and controls other direct current conversion units to maintain original power output. In this way, when the output power of the power conversion system is not significantly decreased, the ripple current of the bus capacitor is suppressed, a service life of the capacitor is prolonged, and long-term reliability of the system is improved. The output current control signal/the input current control signal may be obtained based on the capacitor current of the bus capacitor, or may be obtained based on the sum of the three phases of the currents in the output current of the power conversion system. Both the capacitor current and the sum of the three phases of the currents can accurately reflect the current ripple of the bus capacitor. Therefore, according to this application, suppression effect on the ripple current of the bus capacitor can be improved, a loss of the bus capacitor can be reduced, and long-term reliability of the power conversion system can be improved. In addition, in this application, the controller may: further sequentially control the plurality of direct current conversion units to adjust output currents/input currents to decrease the amplitude of the ripple current of the bus capacitor when the amplitude of the ripple current of the bus capacitor is continuously greater than the first threshold; or sequentially control the plurality of direct current conversion units to work in the normal mode when the amplitude of the ripple current of the bus capacitor becomes smaller, so that these direct current conversion units restore normal power output. In this way, when the ripple current of the bus capacitor is suppressed, as many direct current conversion units as possible may be controlled to still work normally, to improve an overall power of the power conversion system.

## Claims

1. A power conversion system, wherein the power conversion system comprises a controller, M direct current conversion units, a bus capacitor, and an inverter unit, an input end of each of the M direct current conversion units is connected to one direct current power supply, output ends of the M direct current conversion units are connected in parallel and then connected to an input end of the inverter unit, the bus capacitor is connected in parallel to the input end of the inverter unit, and an output end of the inverter unit is configured to connect to a power grid or a load; and
the controller is configured to: control N direct current conversion units in the M direct current conversion units to adjust output currents/input currents when an amplitude of a ripple current of the bus capacitor is greater than a first threshold, to decrease the amplitude of the ripple current of the bus capacitor, wherein M is an integer greater than or equal to 2, and N is an integer less than M and greater than or equal to 1.

2. The power conversion system according to claim 1, wherein the controller is configured to:
determine that the amplitude of the ripple current of the bus capacitor is greater than the first threshold when an output current of the inverter unit or a sum of input currents of the M direct current conversion units is greater than a second threshold.

3. The power conversion system according to claim 1 or 2, wherein the controller is configured to:
control the N direct current conversion units in the M direct current conversion units to adjust the output currents/the input currents, and output currents in a direction opposite to a direction of the ripple current of the bus capacitor when the amplitude of the ripple current of the bus capacitor is greater than the first threshold, to decrease the amplitude of the ripple current of the bus capacitor through current superposition and cancellation effect.

4. The power conversion system according to any one of claims 1 to 3, wherein the controller is configured to:
generate an output current control signal, and control, based on the output current control signal, the N direct current conversion units to work, to adjust the output currents of the N direct current conversion units; or
generate an input current control signal, and control, based on the input current control signal, the N direct current conversion units to work, to adjust the input currents of the N direct current conversion units.

5. The power conversion system according to claim 4, wherein the controller is configured to:
obtain a first output current reference based on a capacitor current of the bus capacitor, and generate the output current control signal based on the first output current reference and sampled output current values of the N direct current conversion units; or
obtain a first input current reference based on a capacitor current of the bus capacitor, and generate the input current control signal based on the first input current reference and sampled input current values of the N direct current conversion units.

6. The power conversion system according to claim 5, wherein the controller is configured to:
obtain an envelope of the capacitor current based on the capacitor current, and obtain the first output current reference or the first input current reference based on the envelope of the capacitor current; or
obtain a low-frequency component of the capacitor current based on the capacitor current, and obtain the first output current reference or the first input current reference based on the low-frequency component of the capacitor current.

7. The power conversion system according to claim 4, wherein the controller is configured to:
obtain a second output current reference based on the output current of the inverter unit, and generate the output current control signal based on the second output current reference and sampled output current values of the N direct current conversion units; or
obtain a second input current reference based on the output current of the inverter unit, and generate the input current control signal based on the second input current reference and sampled input current values of the N direct current conversion units.

8. The power conversion system according to claim 7, wherein the controller is configured to:
obtain an envelope of a sum of three phases of currents in the output current of the inverter unit based on the output current of the inverter unit, and obtain the second output current reference or the second input current reference based on the envelope of the sum of the three phases of the currents; or
obtain a low-frequency component of a sum of three phases of currents in the output current of the inverter unit based on the output current of the inverter unit, and obtain the second output current reference or the second input current reference based on the low-frequency component of the sum of the three phases of the currents.

9. The power conversion system according to any one of claims 1 to 8, wherein the controller is configured to:
control K direct current conversion units in the M direct current conversion units to adjust output currents/input currents when the amplitude of the ripple current of the bus capacitor is greater than a third threshold, to decrease the amplitude of the ripple current of the bus capacitor, wherein the third threshold is greater than or equal to the first threshold, and K is an integer less than M.

10. The power conversion system according to claim 9, wherein the controller is further configured to:
control T other direct current conversion units in the M direct current conversion units except the K direct current conversion units to adjust output currents/input currents when the K direct current conversion units are controlled to adjust the output currents/the input currents to decrease the amplitude of the ripple current of the bus capacitor, and the amplitude of the ripple current of the bus capacitor is greater than a fourth threshold, to decrease the amplitude of the ripple current of the bus capacitor, wherein the fourth threshold is greater than or equal to the third threshold, and a sum of K and T is less than M, and T is an integer greater than or equal to 1.

11. The power conversion system according to claim 10, wherein the controller is further configured to:
control, based on a reference control signal, the T other direct current conversion units to work when the T other direct current conversion units are controlled to adjust the output currents/the input currents to decrease the amplitude of the ripple current of the bus capacitor, and the amplitude of the ripple current of the bus capacitor is less than the fourth threshold, to adjust the input currents/input voltages of the T other direct current conversion units, wherein the reference control signal is obtained based on a preset current reference or a preset voltage reference.

12. The power conversion system according to claim 11, wherein the controller is further configured to:
when the K direct current conversion units are controlled to adjust the output current/the input current to decrease the amplitude of the ripple current of the bus capacitor, and the amplitude of the ripple current of the bus capacitor is less than the third threshold, control, based on the reference control signal, one or more direct current conversion units in the K direct current conversion units to work, to adjust input currents/ input voltages of the one or more direct current conversion units.

13. A ripple current suppression method of a power conversion system, wherein the method is applied to a controller in the power conversion system, the power conversion system further comprises M direct current conversion units, a bus capacitor, and an inverter unit, an input end of each of the M direct current conversion units is connected to one direct current power supply, output ends of the M direct current conversion units are connected in parallel and then connected to an input end of the inverter unit, the bus capacitor is connected in parallel to the input end of the inverter unit, and an output end of the inverter unit is configured to connect to a power grid or a load; and the method comprises:
controlling N direct current conversion units in the M direct current conversion units to adjust output currents/input currents when an amplitude of a ripple current of the bus capacitor is greater than a first threshold, to decrease the amplitude of the ripple current of the bus capacitor, wherein M is an integer greater than or equal to 2, and N is an integer less than M and greater than or equal to 1.

14. The method according to claim 13, wherein the method further comprises:
determining that the amplitude of the ripple current of the bus capacitor is greater than the first threshold when an output current of the inverter unit or a sum of input currents of the M direct current conversion units is greater than a second threshold.

15. The method according to claim 13 or 14, wherein the controlling N direct current conversion units in the M direct current conversion units to adjust output currents/input currents when an amplitude of a ripple current of the bus capacitor is greater than a first threshold, to decrease the amplitude of the ripple current of the bus capacitor comprises:
controlling the N direct current conversion units in the M direct current conversion units to adjust the output currents/the input currents, and outputting currents in a direction opposite to a direction of the ripple current of the bus capacitor when the amplitude of the ripple current of the bus capacitor is greater than the first threshold, to decrease the amplitude of the ripple current of the bus capacitor through current superposition and cancellation effect.

16. The method according to any one of claims 13 to 15, wherein the controlling N direct current conversion units in the M direct current conversion units to adjust output currents comprises:
generating an output current control signal, and controlling, based on the output current control signal, the N direct current conversion units to work, to adjust the output currents of the N direct current conversion units; or
the controlling N direct current conversion units in the M direct current conversion units to adjust input currents comprises:
generating an input current control signal, and controlling, based on the input current control signal, the N direct current conversion units to work, to adjust the input currents of the N direct current conversion units.

17. The method according to claim 16, wherein the generating an output current control signal comprises:
obtaining a first output current reference based on a capacitor current of the bus capacitor, and generating the output current control signal based on the first output current reference and sampled output current values of the N direct current conversion units; or
the generating an input current control signal comprises:
obtaining a first input current reference based on a capacitor current of the bus capacitor, and generating the input current control signal based on the first input current reference and sampled input current values of the N direct current conversion units.

18. The method according to claim 17, wherein the obtaining a first output current reference based on a capacitor current of the bus capacitor comprises:
obtaining an envelope of the capacitor current based on the capacitor current, and obtaining the first output current reference based on the envelope of the capacitor current; or
obtaining a low-frequency component of the capacitor current based on the capacitor current, and obtaining the first output current reference based on the low-frequency component of the capacitor current.

19. The method according to claim 16, wherein the generating an output current control signal comprises:
obtaining a second output current reference based on the output current of the inverter unit, and generating the output current control signal based on the second output current reference and sampled output current values of the N direct current conversion units; or
the generating an input current control signal comprises:
obtaining a second input current reference based on the output current of the inverter unit, and generating the input current control signal based on the second input current reference and sampled input current values of the N direct current conversion units.

20. The method according to claim 19, wherein the obtaining a second output current reference based on the output current of the inverter unit comprises:
obtaining an envelope of a sum of three phases of currents in the output current of the inverter unit based on the output current of the inverter unit, and obtaining the second output current reference based on the envelope of the sum of the three phases of the currents; or
obtaining a low-frequency component of a sum of three phases of currents in the output current of the inverter unit based on the output current of the inverter unit, and obtaining the second output current reference based on the low-frequency component of the sum of the three phases of the currents.
